# EUROPÄISCHE PATENTANMELDUNG

(11) **EP 4 293 436 A1**
(43) Veröffentlichungstag der Anmeldung: **20.12.2023**
(21) Anmeldenummer: 23188132.7
(22) Anmeldetag: 03.07.2019
(51) Int. Cl.: G05B 19/00, G06T 19/00, B23Q 3/06, B23Q 17/22, B23Q 17/24, G05B 19/418, G06F 3/01

(54) **ANORDNUNG UMFASSEND EIN CNC-BEARBEITUNGSSYSTEM UND EINE AUGMENTED-REALITY ANZEIGEVORRICHTUNG**

(30) Priorität: 11.07.2018 DE 102018211478; 06.03.2019 DE 102019105605
(62) Teilanmeldung aus: 19739861.3
(71) Anmelder: Felder KG, 6060 Hall (AT)
(72) Erfinder: FELDER, Johann, 6060 Hall in Tirol (AT)
(74) Vertreter: Torggler & Hofmann Patentanwälte - Innsbruck

(57) **Zusammenfassung**

Anordnung umfassend
- ein CNC-Bearbeitungszentrum (1) zum, insbesondere spanabhebenden, Bearbeiten wenigstens eines, insbesondere plattenförmigen, Werkstücks (2), insbesondere aus Holz oder aus wenigstens einem Holzaustauschstoff,
- wenigstens eine Werkstückauflage (3) und
- zumindest ein zumindest teilweise manuell auf der wenigstens einen Werkstückauflage (3) zu positionierendes Werkstück (2) und/oder Spannmittel (4) zum Festhalten des wenigstens einen Werkstücks (2),
wobei wenigstens eine Augmented-Reality-Anzeigevorrichtung (5) vorgesehen ist, welche dazu ausgebildet ist, ein reales Bild der wenigstens einen Werkstückauflage (3) oder eines Teils davon mit Informationen zu einer vorgebbaren Sollposition (xy4) und/oder Soll-Bearbeitungskontur (k1) des zumindest einen Werkstücks (2) und/oder zu einer vorgebbaren Sollposition (xy2) des zumindest einen Spannmittels (4) zu überlagern, und welche von einem Nutzer (6), welcher das zumindest eine Werkstück (2) und/oder Spannmittel (4) auf der wenigstens einen Werkstückauflage (3) zumindest teilweise manuell positioniert, am Körper tragbar ist.

## Beschreibung

Die Erfindung betrifft eine Anordnung umfassend ein CNC-Bearbeitungszentrum, wenigstens eine Werkstückauflage und zumindest ein zumindest teilweise manuell auf der wenigstens einen Werkstückauflage zu positionierendes Werkstück und/oder Spannmittel mit den Merkmalen des Oberbegriffs des Anspruchs 1, ein Verfahren zur zumindest teilweise manuellen Positionierung wenigstens eines Spannmittels, ein Verfahren zur zumindest teilweise manuellen Positionierung zumindest eines Werkstücks und die Verwendung einer am Körper eines Nutzers tragbaren Augmented-Reality-Anzeigevorrichtung.

Gattungsgemäße Anordnungen und Verfahren zur Positionierung sind seit langem in der CNC-Bearbeitung bekannt. Zur Bearbeitung von Werkstücke mit einem CNC-Bearbeitungszentrum müssen diese auf einer Werkstückauflage zumindest temporär festgehalten werden. Dies erfolgt gewöhnlich mittels Spannmitteln, welche auf der Werkstückauflage positioniert werden können. Auch ist die Positionierung eines Werkstücks direkt auf der Werkstückauflage bekannt. Die Positionierung erfolgt üblicher Weise nicht frei, sondern muss an den geplanten Bearbeitungsprozess angepasst werden. Eine korrekte Positionierung des Werksstücks und/oder der Spannmittel kann gewährleisten, dass ein Bearbeitungswerkzeug des CNC-Bearbeitungszentrums korrekt mit dem Werkstück in Eingriff gebracht werden kann und Kollisionen eines Bearbeitungswerkzeugs des CNC-Bearbeitungszentrums mit einem Spannmittel vermieden werden können. Eine Positionierung des zumindest einen Werkstücks und/oder Spannmittels erfolgt üblicherweise zumindest teilweise manuell.

Problematisch ist bei gattungsgemäßen Anordnungen und Verfahren zur Positionierung, dass eine korrekte, zumindest teilweise manuelle Positionierung des Werkstück und/oder der Spannmittel hohe Anforderungen an den Nutzer, durch welchen die manuelle Positionierung erfolgt, stellt. So müssen üblicher Weise Koordinaten aus einem Bestückungsplan abgelesen und mit Hilfe von Messeinrichtungen (Längen- oder Wegmesseinrichtungen wie etwa ein Lineal) auf die Werkstückauflage übertragen werden. Das Werkstück und/oder die Spannmittel werden dann gewöhnlich manuell an den ausgemessenen Positionen positioniert. Dies ist nachteilig mit einer hohen Fehleranfälligkeit und einem hohen Arbeits- und Zeitaufwand verbunden. Eine Kontrolle der korrekten Positionierung des Werkstücks und/oder der Spannmittel kann lediglich über ein ebenso aufwändiges Nachmessen erfolgen. Es ist auch bekannt, nach einer erfolgten Positionierung von Spannmitteln einen Bearbeitungsvorgang mit stark reduzierter Bearbeitungsgeschwindigkeit des CNC-Bearbeitungszentrums "durchzufahren" und so einen kollisionsfreien Ablauf zu bestätigen. In beiden Fällen ist die Kontrolle der korrekten Positionierung mit hohem Zeit- und Arbeitsaufwand verbunden. Auch lässt sich die Vollständigkeit der Anzahl von positionierten Spannmitteln und/oder gegebenenfalls Werkstücken bei herkömmlichen Anordnungen nur schwer kontrollieren.

Aufgabe der Erfindung ist die Bereitstellung einer gattungsgemäßen Anordnung und eines Verfahrens, bei welchen die oben diskutierten Probleme vermieden werden.

Diese Aufgabe wird durch eine Anordnung mit den Merkmalen des Anspruchs 1, einem Verfahren zur zumindest teilweise manuellen Positionierung und einer erfindungsgemäßen Verwendung gelöst. Vorteilhafte Ausführungsformen der Erfindung sind in den abhängigen Ansprüchen definiert.

Es ist vorgesehen, dass die Anordnung ein CNC-Bearbeitungszentrum zum Bearbeiten wenigstens eines Werkstücks wenigstens eine Werkstückauflage und gegebenenfalls zumindest ein zumindest teilweise manuell auf der wenigstens einen Werkstückauflage zu positionierendes Spannmittel zum Festhalten des wenigstens einen Werkstücks aufweist. Die Bearbeitung des wenigstens einen Werkstücks kann ein spanabhebendes Bearbeiten wie etwa Fräsen, Bohren oder Sägen umfassen. Das zu bearbeitende Werkstück kann ein plattenförmiges Werkstück, beispielsweise ein flächig ausgedehntes, ebenes Werkstück, sein. Das Werkstück kann aus Holz oder aus wenigstens einem Holzaustauschstoff gefertigt sein. Als Beispiele für ein Werkstück können Holzfaserplatten oder Schichtholzplatten genannt werden.

Unter einem CNC-Bearbeitungszentrum kann eine rechnergesteuerte Werkzeugmaschine verstanden werden, mit welcher eine geführte Bewegung eines Bearbeitungswerkzeugs zumindest teilweise automatisch durchgeführt werden kann.

Eine geführte Bewegung eines entsprechenden Bearbeitungswerkzeugs kann Bearbeitungsvorgänge wie etwa Fräsen, Bohren oder Sägen umfassen. Ein solches CNC-Bearbeitungszentrum kann beispielsweise als Portalfräse ausgebildet sein. Eine Steuerung des CNC-Bearbeitungszentrums kann über eine rechnergestützte Steuereinrichtung erfolgen.

Die Werkstückauflage kann der Platzierung und dem Festhalten des zu bearbeitenden Werkstücks dienen und kann Teil des CNC-Bearbeitungszentrums sein oder gesondert von diesem ausgebildet sein. Ein CNC-Bearbeitungszentrum kann beispielsweise wechselbare Werkstückauflagen aufweisen. Das wenigstens eine Werkstück kann auf die wenigstens eine Werkstückauflage positioniert und von dieser festgehalten werden, wobei ein Positionieren des Werkstücks zumindest teilweise manuell durch einen Nutzer erfolgen kann.

Auf der wenigstens einen Werkstückauflage kann alternativ oder zusätzlich zumindest ein Spannmittel positioniert werden, welches auch zum Festhalten des wenigstens einen Werkstücks dienen kann. Ein Positionieren des Spannmittels kann zumindest teilweise manuell durch einen Nutzer erfolgen. Das wenigstens eine Spannmittel kann direkt auf die Werkstückauflage positioniert werden und/oder auf bewegbaren Trägern, wie etwa entlang der Werkstückauflage verschiebbaren Balken oder Konsolen, anordenbar sein.

Weiter ist wenigstens eine Augmented-Reality-Anzeigevorrichtung vorgesehen, welche dazu ausgebildet ist, ein reales Bild der wenigstens einen Werkstückauflage oder eines Teils davon mit Informationen zu einer vorgebbaren Sollposition und/oder Soll-Bearbeitungskontur des zumindest einen Werkstücks und/oder zu einer vorgebbaren Sollposition des zumindest einen Spannmittels zu überlagern, und welche von einem Nutzer, welcher das zumindest eine Werkstück und/oder Spannmittel auf der wenigstens einen Werkstückauflage zumindest teilweise manuell positioniert, am Körper tragbar ist.

Unter einer Augmented-Reality-Anzeigevorrichtung kann grundsätzlich eine Vorrichtung verstanden werden, mit welcher eine computergestützte Erweiterung der Realitätswahrnehmung erreicht werden kann. Im Gegensatz zu einer Virtual-Reality-Anzeigevorrichtung, wo es sich um ein virtuelles (beispielsweise gänzlich computergeneriertes) Abbild einer real existierenden Umgebung handelt, wird bei einer Augmented-Reality-Anzeigevorrichtung ein reales Bild mit digitalen Informationen/Daten angereichert. So kann von einem Nutzer mit dessen Augen unmittelbar ein reales Bild der Umgebung wahrgenommen werden und von der Augmented-Reality-Anzeigevorrichtung in dessen Sichtfeld zusätzliche Informationen/Daten eingeblendet werden. Dass von einem Nutzer mit dessen Augen unmittelbar ein reales Bild der Umgebung wahrgenommen wird, hat den Vorteil, dass dies ohne jegliche Verzögerung oder Beeinträchtigung durch die Augmented-Reality-Anzeigevorrichtung erfolgen kann.

Im Zusammenhang mit dem CNC-Bearbeitungszentrum kann das von einem Nutzer wahrgenommen Umfeld einem realen Bild der wenigstens einen Werkstückauflage der Anordnung, oder eines Teils davon, entsprechen. Durch die Augmented-Reality-Anzeigevorrichtung können einem Nutzer der Anordnung das von diesem unmittelbar erfasste reale Bild mit Informationen zu den Sollpositionen und/oder Soll-Bearbeitungskonturen der Werkstücke und/oder zu einer vorgebbaren Sollposition des zumindest einen Spannmittels überlagert werden. Die Augmented-Reality-Anzeigevorrichtung kann dabei von einem Nutzer, welcher das zumindest eine Werkstück und/oder Spannmittel auf der wenigstens einen Werkstückauflage zumindest teilweise manuell positioniert, am Körper tragbar sein. Ist die Augmented-Reality-Anzeigevorrichtung von einem Nutzer am Körper tragbar, kann die Augmented-Reality-Anzeigevorrichtung den Bewegungen des Nutzers, beispielsweise dessen Ausrichtung relativ zum CNC-Bearbeitungszentrum, zur Werkstückauflage oder der Spannmittel, einfach nachfolgen. Ein Nutzer kann sich mit der Augmented-Reality-Anzeigevorrichtung im Wesentlichen frei im Umfeld des CNC-Bearbeitungszentrums und der Werkstückauflage bewegen können.

Die Informationen zu der vorgebbaren Sollposition des zumindest einen Werkstücks und/oder Spannmittels können grundsätzlich grafisch und/oder numerisch dargestellt werden. So kann beispielsweise eine Kontur der Sollposition des zumindest einen Spannmittels und/oder Werkstücks grafisch hervorgehoben werden. Ebenso ist es möglich, dass die Koordinaten der zumindest einen vorgebbaren Sollposition angezeigt werden.

Es können Informationen zu einer Sollposition des wenigstens einen Werkstücks beim Bearbeitungsvorgang angezeigt werden. Dies kann beispielsweise durch die Darstellung einer grafischen Repräsentation der Konturen des wenigstens einen Werkstücks erfolgen.

Es können Informationen zu wenigstens einer Soll-Bearbeitungskontur auf dem wenigstens einen Werkstück angezeigt werden. Dies kann beispielsweise durch eine grafische Darstellung eines Pfades eines Bearbeitungswerkzeugs des CNC-Bearbeitungszentrums erfolgen. Dadurch kann sichergestellt werden, dass das wenigstens eine Werkstück korrekt positioniert ist.

Dabei kann vorteilhaft sein, wenn die wenigstens eine Augmented-Reality-Anzeigevorrichtung zwischen der wenigstens einen Werkstückauflage und einem Auge des Nutzers anordenbar ist. Dadurch kann zumindest ein Teil eines Sichtfelds des Nutzers mit Informationen zu der zumindest einen vorgebbaren Sollposition überlagert oder ausfüllt werden. Dies kann erfolgen, wenn der Nutzer die wenigstens eine Werkstückauflage oder das zumindest eine Werkstück betrachtet. Vorzugsweise kann die wenigstens eine Augmented-Reality-Anzeigevorrichtung als Brille, also als vor einem Auge oder den Augen des Nutzers tragbare Konstruktion, ausgebildet sein.

Es kann vorteilhaft sein, dass die wenigstens eine Augmented-Reality-Anzeigevorrichtung wenigstens eine Kamera zur Aufnahme des realen Bild der wenigstens einen Werkstückauflage, oder eines Teils davon, aufweist. Das von der Kamera aufgenommene Bild kann beispielsweise zur Generierung von Informationen zu einer vorgebbaren Sollposition des zumindest einen Werkstücks und/oder Spannmittels herangezogen werden. Das von der Kamera aufgenommene Bild kann zur Bestimmung der Position und Ausrichtung der Augmented-Reality-Anzeigevorrichtung - und somit gegebenenfalls zur Position und Blickrichtung des Nutzers - relativ zum CNC-Bearbeitungszentrum, der Werkstückauflage oder des zu positionierenden Spannmittels herangezogen werden.

Es kann vorteilhaft sein, dass die wenigstens eine Anzeigevorrichtung zur Darstellung des virtuellen Bildes umfassend Informationen zu den Sollpositionen der Spannmittel aufweist. Es können auch Informationen zu der Sollposition des Werkstücks vorgesehen sein. Dabei kann das reale Bild der wenigstens einen Werkstückauflage oder eines Teils davon auch durch die Anzeigevorrichtung dargestellt werden, beispielsweise indem die Werkstücksauflage oder ein Teil davon von einem Nutzer durch die Anzeigevorrichtung hindurch betrachtet wird. Dies kann beispielsweise in jenem Fall geben sein, in welchem die Augmented-Reality-Anzeigevorrichtung zwischen der wenigstens einen Werkstückauflage und einem Auge des Nutzers anordenbar ist.

Es kann vorteilhaft sein, wenn wenigstens ein Positionsmarker für die Augmented-Reality-Anzeigevorrichtung vorgesehen ist. Dabei kann vorgesehen sein, dass der oder die Positionsmarker von der Augmented-Reality-Anzeigevorrichtung, beispielsweise von einer Kamera der Augmented-Reality-Anzeigevorrichtung, erfasst wird oder werden und daraus eine relative Position und Ausrichtung der Augmented-Reality-Anzeigevorrichtung relativ zum Positionsmarker oder zu den Positionsmarkern abgeleitet wird. Dabei kann vorteilhaft sein, wenn der wenigstens eine Positionsmarker an der wenigstens einen Werkstückauflage und/oder dem zumindest einen Spannmittel angeordnet ist. Es ist auch denkbar, mindestens einen Positionsmarker an dem Werkstück anzuordnen. Daraus kann eine relative Position und Ausrichtung der Augmented-Reality-Anzeigevorrichtung relativ zum Positionsmarker oder zu den Positionsmarkern abgeleitet werden. Ebenso kann die Position des zumindest einen Spannmittels zur Werkstücksauflage oder zum Werkstück bestimmt werden.

Es kann vorteilhaft sein, wenn die Augmented-Reality-Anzeigevorrichtung wenigstens eine Kamera zur Aufnahme von Bilddaten des realen Bild der wenigstens einen Werkstückauflage oder eines Teils davon aufweist und aus den Bilddaten die Position der wenigstens einen Werkstückauflage und/oder dem zumindest einen Werkstücks und/oder Spannmittels bestimmbar ist. Dies kann etwa dadurch erfolgen, dass Konturen, insbesondere Kanten, der wenigstens einen Werkstückauflage, des zumindest einen Werkstücks und/oder dem zumindest einen Spannmittel erfasst werden. Daraus kann die Position des zumindest einen Spannmittels und/oder Werkstücks zur Werkstücksauflage, die Positionen mehrerer Spannmittel zueinander und ggf. eine relative Position und Ausrichtung der Augmented-Reality-Anzeigevorrichtung zur Werkstücksauflage bestimmt werden. Dies kann ebenso für das Werkstück erfolgen.

Es kann vorteilhaft sein, wenn das von der Augmented-Reality-Anzeigevorrichtung angezeigte virtuelle Bild zumindest eine der folgenden Informationen enthält.
- Informationen zum Grad einer Überdeckung einer Ist-Position eines Spannmittels mit der Sollposition des Spannmittels und/oder
- Informationen zum Grad einer Überdeckung einer Ist-Position eines Werkstücks mit der Sollposition des Werkstücks

Der Grad der Überdeckung kann jeweils grafisch und/oder numerisch dargestellt werden. So können beispielsweise eine Kontur des Werkstücks und/oder Spannmittels in seiner aktuellen Position und gleichzeitig dazu die Sollposition des Werkstücks und/oder Spannmittels grafisch hervorgehoben werden. Dies kann durch eine Überlagerung des reales Bild des Werkstücks und/oder Spannmittels oder eines Teils davon mit den Informationen zum Grad der Überdeckung mit der vorgebbaren Sollposition des zumindest einen Werkstücks und/oder Spannmittels erfolgen.

Das von der Augmented-Reality-Anzeigevorrichtung angezeigte virtuelle Bild kann Informationen dazu enthalten, welches der Spannmittel als nächstes positioniert werden soll und/oder in welche Richtung ein Spannmittel bewegt werden muss, um es in die vorgegebene vorgebbaren Sollposition zu bringen.

Dazu analoge Informationen können auch für das Werkstück bereitgestellt werden.

Die Anordnung kann weiter eine Steuereinrichtung umfassen, mit welcher das CNC-Bearbeitungszentrum zur Bearbeitung des wenigstens einen Werkstücks ansteuerbar ist. Die Steuereinrichtung kann zur Ansteuerung eines Bearbeitungswerkzeugs des CNC-Bearbeitungszentrums ausgebildet sein. Die Steuereinrichtung kann zur Ansteuerung - beispielsweise zur Aktivierung - Werkstückauflage und/oder des wenigstens einen Spannmittels ausgebildet sein. Die Steuereinrichtung kann getrennt von dem CNC-Bearbeitungszentrum oder in diesem integriert ausgebildet sein.

Die Steuereinrichtung kann einen Prozessor, einen Speicher und eine Kommunikationseinrichtung zur drahtlosen und/oder kabelgebundenen Kommunikation der Steuereinrichtung mit dem CNC-Bearbeitungszentrum und/oder der Augmented-Reality-Anzeigevorrichtung aufweisen.

Es ist ebenso denkbar, dass die Anordnung einen Rechner - beispielsweise einen Personal Computer - und eine Steuereinrichtung aufweist, wobei der Rechner einen Prozessor, einen Speicher und eine Kommunikationseinrichtung zur drahtlosen und/oder kabelgebundenen Kommunikation des Rechners mit der Steuereinrichtung, dem CNC-Bearbeitungszentrum und/oder der Augmented-Reality-Anzeigevorrichtung aufweisen kann.

Die wenigstens eine Augmented-Reality-Anzeigevorrichtung kann einen Prozessor, einen Speicher und eine Kommunikationseinrichtung zur drahtlosen und/oder kabelgebundenen Kommunikation der Augmented-Reality-Anzeigevorrichtung mit der Steuereinrichtung, dem CNC-Bearbeitungszentrum und/oder dem Rechner aufweisen.

Daten und Informationen zu der Ausstattung des CNC-Bearbeitungszentrums, der Werkstückauflage, dem wenigstens einen Spannmittels, der wenigstens einen Augmented-Reality-Anzeigevorrichtung und/oder zur Bearbeitung des wenigstens einen Werkstücks können in einem Speicher der Steuereinrichtung und/oder der Augmented-Reality-Anzeigevorrichtung und/oder des Rechners hinterlegt sein.

Es kann grundsätzlich vorteilhaft sein, wenn die Informationen zu der vorgebbaren Sollposition und/oder Soll-Bearbeitungskontur des zumindest einen Werkstücks und/oder der Sollposition des zumindest einen Spannmittels zumindest aus Informationen zur Bearbeitung des Werkstücks berechnet werden. Informationen zur Bearbeitung des Werkstücks können Daten zur Ansteuerung des CNC-Bearbeitungszentrums - und somit gegebenenfalls Daten zur Ansteuerung eines Bearbeitungswerkzeugs des CNC-Bearbeitungszentrums - enthalten. Daraus kann sich eine Sollposition des zumindest einen Werkstücks und/oder Spannmittels vorgeben lassen, in welcher es beispielsweise bei einer Bearbeitung des wenigstens einen Werkstücks zu keiner Kollision der Werkstückauflage und/oder mit dem Spannmittel kommt.

Dabei ist möglich, dass aus den unterschiedlichen hinterlegten Daten und Informationen - und gegebenenfalls aus zusätzlichen von Augmented-Reality-Anzeigevorrichtung erfassten Bilddaten -von wenigstens einem der Prozessoren die Informationen zu einer vorgebbaren Sollposition des zumindest einen Werkstücks und/oder Spannmittels berechnet werden und gegebenenfalls über etwaige vorhandene Kommunikationseinrichtungen an die Augmented-Reality-Anzeigevorrichtung übermittelt werden.

Die Daten und Informationen, aus welchen die Informationen zu einer vorgebbaren Sollposition des zumindest einen Werkstücks und/oder Spannmittels berechnet werden, können die Abmessungen des CNC-Bearbeitungszentrums, der Werkstückauflage und des zu bearbeitenden Werkstücks, sowie die Art, Anzahl und Abmessungen des wenigstens einen Spannmittels umfassen.

Es kann vorgesehen sein, dass das zumindest eine Spannmittel als Kantengreifer oder als Sauggreifer ausgebildet ist. Unter einem Kantengreifer kann allgemein eine mechanische Klemmvorrichtung verstanden werden, welche ein Werkstück zum Festhalten an dessen Kante eingeklemmt. Unter einem Sauggreifer kann allgemein eine Haltevorrichtung verstanden werden, welche ein Werkstück durch einen Druckunterschied gegenüber dem Umgebungsdruck (Atmosphärendruck) festhält. Die Werkstückauflage kann in Form eines Matrixtisches ausgebildet sein. Unter einem Matrixtisch kann allgemein eine flächig ausgedehnte Haltevorrichtung verstanden werden, welche (ähnlich einem Sauggreifer) ein Werkstück durch einen Druckunterschied gegenüber dem Umgebungsdruck (Atmosphärendruck) festhält.

Wie eingangs erwähnt, wird auch Schutz für ein Verfahren zur zumindest teilweise manuellen Positionierung zumindest eines Spannmittels begehrt. Bei einem solchen Verfahren zur zumindest teilweise manuellen Positionierung des zumindest einen Spannmittels zum Festhalten wenigstens eines, insbesondere plattenförmigen, Werkstücks, insbesondere aus Holz oder aus wenigstens einem Holzaustauschstoff, auf wenigstens einer Werkstückauflage durch einen Nutzer unter Verwendung einer wie zuvor beschriebenen Anordnung sind zumindest die folgenden Verfahrensschritte vorgesehen:
Zunächst erfolgt eine Vorgabe einer Sollposition des zumindest einen Spannmittels auf der wenigstens einen Werkstückauflage. Die Vorgabe einer Sollposition kann unter Einbeziehung von vorliegenden Daten und Informationen, beispielsweise zur Ausstattung der Teile der Anordnung und der angedachten Bearbeitung des Werkstücks, erfolgen.

In einem weiteren Verfahrensschritt ist vorgesehen, dass eine Überlagerung eines realen Bildes der wenigstens einen Werkstückauflage oder eines Teils davon mit Informationen zur vorgegebenen Sollposition des wenigstens einen Spannmittels erfolgt. Ein Nutzer kann dadurch in der zumindest teilweise manuellen Positionierung des wenigstens einen Spannmittels unterstützt werden.

Es ist somit in einem weiteren Verfahrensschritt vorgesehen, dass eine zumindest teilweise manuelle Positionierung des wenigstens einen Spannmittels an seiner Sollposition anhand des mit den Informationen zur vorgegebenen Sollposition des wenigstens einen Spannmittels überlagerten realen Bildes der wenigstens einen Werkstückauflage oder eines Teils davon erfolgt. Eine Positionierung durch einen Nutzer kann so zeitsparend und mit hoher Genauigkeit erfolgen.

Ein solches Verfahren kann beispielsweise mit Spannmitteln an einer Werkstückauflage erfolgen, welche direkt an einem CNC-Bearbeitungszentrum angeordnet ist. Es ist jedoch auch denkbar, dass ein solches Verfahren an von einem CNC-Bearbeitungszentrum gesondert ausgebildeten Werkstückauflagen erfolgt. So kann beispielsweise eine erfindungsgemäße Positionierung von Spannmitteln an mehreren Werkstückauflagen erfolgen, welche dann fertig vorpositioniert und ggf. bestückt nacheinander mit einem CNC-Bearbeitungszentrum oder gleichzeitig mit mehreren CNC-Bearbeitungszentren vereint werden.

Auch wird Schutz für ein Verfahren zur zumindest teilweise manuellen Positionierung zumindest eines, insbesondere plattenförmigen, Werkstücks, insbesondere aus Holz oder aus wenigstens einem Holzaustauschstoff, auf wenigstens einer Werkstückauflage durch einen Nutzer unter Verwendung einer wie zuvor beschriebenen Anordnung.

Zunächst erfolgt eine Vorgabe einer Sollposition des zumindest einen Werkstücks auf der wenigstens einen Werkstückauflage und/oder einer Soll-Bearbeitungskontur des zumindest einen Werkstücks.

In einem weiteren Verfahrensschritt ist vorgesehen, dass eine Überlagerung eines realen Bildes der wenigstens einen Werkstückauflage oder eines Teils davon mit Informationen zur vorgegebenen Sollposition und/oder Soll-Bearbeitungskontur des zumindest einen Werkstücks erfolgt.

Es ist somit in einem weiteren Verfahrensschritt vorgesehen, dass eine zumindest teilweise manuelle Positionierung des zumindest einen Werkstücks anhand des mit den Informationen zur vorgegebenen Sollposition und/oder Soll-Bearbeitungskontur des zumindest einen Werkstücks überlagerten realen Bildes der wenigstens einen Werkstückauflage, oder eines Teils davon, erfolgt.

In einem weiteren Verfahrensschritt kann vorgesehen sein, dass eine Durchführung der Bearbeitung erfolgt. Dabei kann ein realen Bildes zumindest eines Ausschnitts des wenigstens einen Werkstücks auf der wenigstens einen Werkstückauflage mit Informationen zu wenigstens einer Soll-Bearbeitungskontur überlagert werden. Durch einen Nutzer kann so beispielsweise ein Fortschritt der Bearbeitung beobachtet werden.

Durch die folgenden Verfahrensschritte kann das zuvor beschriebene Verfahren zur zumindest teilweise manuellen Positionierung zumindest eines Spannmittels - wiederum unter Verwendung einer wie zuvor beschriebenen Anordnung - zur, insbesondere spanabhebenden, Bearbeitung wenigstens eines, insbesondere plattenförmigen, Werkstücks, weitergebildet werden:

Zunächst erfolgt eine Vorgabe einer Sollposition des wenigstens einen Werkstücks für seine Bearbeitung. Diese Vorgabe kann beispielsweise Informationen dazu enthalten, wie das zu bearbeitende Werkstück auf den vorpositionierten Spannmitteln anzuordnen ist.

In einem weiteren Verfahrensschritt erfolgt eine Überlagerung eines realen Bildes der wenigstens einen Werkstückauflage oder eines Teils davon mit Informationen zur vorgegebenen Sollposition des wenigstens einen Werkstücks. Die Überlagerung der Informationen kann dabei durch die Augmented-Reality-Anzeigevorrichtung erfolgen.

Es ist weiter vorgesehen, dass eine Positionierung des wenigstens einen Werkstücks an seiner Sollposition anhand des mit den Informationen zur vorgegebenen Sollposition des wenigstens einen Werkstücks überlagerten realen Bildes der wenigstens einen Werkstückauflage oder eines Teils davon erfolgt.

In einem weiteren Verfahrensschritt ist vorgesehen, dass eine Durchführung der Bearbeitung erfolgt. Dabei kann ein realen Bildes zumindest eines Ausschnitts des wenigstens einen Werkstücks auf der wenigstens einen Werkstückauflage mit Informationen zu wenigstens einer Soll-Bearbeitungskontur überlagert werden. Durch einen Nutzer kann so beispielsweise ein Fortschritt der Bearbeitung beobachtet werden.

Es wird auch Schutz für die Verwendung einer am Körper eines Nutzers tragbaren Augmented-Reality-Anzeigevorrichtung zur zumindest teilweise manuellen Positionierung wenigstens eines Spannmittels zum Festhalten wenigstens eines Werkstücks während einer Bearbeitung auf wenigstens einem Spannmittel auf wenigstens einer Werkstückauflage an einer vorgebbaren Sollposition begehrt. Das Werkstück kann plattenförmig, insbesondere aus Holz oder aus wenigstens einem Holzaustauschstoff, ausgebildet sein. Die Bearbeitung kann insbesondere spanabhebend sein. Die Verwendung der am Körper eines Nutzers tragbaren Augmented-Reality-Anzeigevorrichtung kann für eine wie zuvor beschriebene Anordnung erfolgen. Die Verwendung kann weiter eine nachfolgende Positionierung des wenigstens einen Werkstücks an einer vorgebbaren Sollposition auf oder an dem wenigstens einen Spannmittel umfassen.

Auch wird Schutz für die Verwendung einer am Körper eines Nutzers tragbaren Augmented-Reality-Anzeigevorrichtung zur zumindest teilweise manuellen Positionierung wenigstens eines, insbesondere plattenförmigen, Werkstücks, insbesondere aus Holz oder aus wenigstens einem Holzaustauschstoff, auf wenigstens einer Werkstückauflage oder auf oder an wenigstens einem Spannmittel auf der wenigstens einen Werkstückauflage, insbesondere in einer wie zuvor beschriebenen Anordnung.

Ausführungsbeispiele der Erfindung werden anhand der Figuren diskutiert. Es zeigen:
- Fig. 1: eine schematische Darstellung eines Nutzers und einer Ausführung einer Anordnung,
- Fig. 2: eine Ausführung einer Augmented-Reality-Anzeigevorrichtung,
- Fig. 3a: eine schematische Darstellung eines realen Bildes einer Ausführung einer Werkstückauflage mit Spannmitteln,
- Fig. 3b: eine schematische Darstellung eines virtuellen Bildes einer Werkstückauflage mit Spannmitteln,
- Fig. 3c: eine schematische Darstellung einer Überlagerung eines realen Bildes mit einem virtuellen Bild einer Werkstückauflage mit Spannmitteln,
- Fig. 3d: eine schematische Darstellung eines realen Bildes einer Werkstückauflage mit positionierten Spannmitteln,
- Fig. 3e: eine schematische Darstellung eines realen Bildes einer Werkstückauflage mit positionierten Spannmittel und einem zu positionierenden Werkstück,
- Fig. 3f: eine schematische Darstellung eines virtuellen Bildes eines Werkstücks,
- Fig. 3g: eine schematische Darstellung einer Überlagerung eines realen Bildes mit einem virtuellen Bild einer Werkstückauflage mit Spannmitteln und einem Werkstück,
- Fig. 3h: ein eine schematische Darstellung eines realen Bildes einer Werkstückauflage mit positioniertem Werkstück,
- Fig. 4: eine schematische Darstellung eines Teils einer Ausführung der Anordnung,
- Fig. 5: eine Ausführung eines Spannmittels in Form eines Sauggreifers,
- Fig. 6: eine Ausführung eines Spannmittels in Form eines Kantengreifers,
- Fig. 7: ein Flussdiagramm eines Verfahrens zur Positionierung zumindest eines Spannmittels,
- Fig. 8: eine schematische Darstellung eines Nutzers und einer weiteren Ausführung einer Anordnung,
- Fig. 9a bis 9d: schematische Darstellungen von realen und virtuellen Bildern einer Werkstückauflage und eines Werkstücks, und
- Fig 10: ein Flussdiagramm eines Verfahrens zu Positionierung zumindest eines Werkstücks.

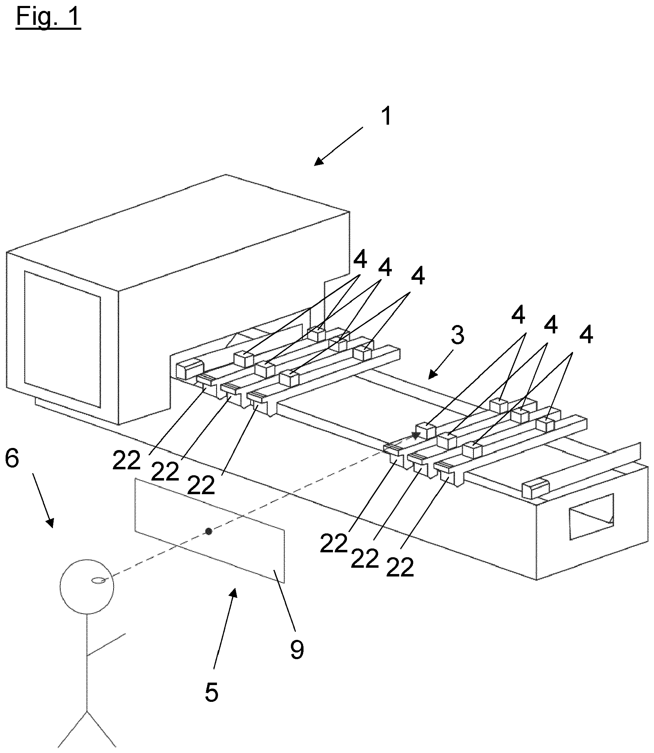

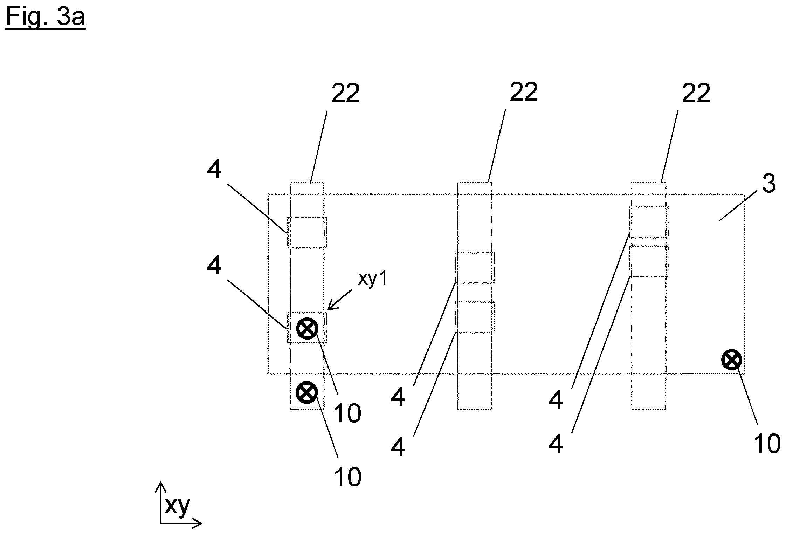

Figur 1 zeigt eine Anordnung mit einem CNC-Bearbeitungszentrum 1 zum Bearbeiten wenigstens eines hier nicht dargestellten Werkstücks, einer Werkstückauflage 3 und mehreren zumindest teilweise manuell auf der Werkstückauflage 3 zu positionierenden Spannmitteln 4 zum Festhalten des wenigstens einen Werkstücks. Die zu positionieren Spannmittel 4 sind auf entlang der Werkstückauflage 3 verschiebbaren Konsolen 22 anordenbar. Anders als dargestellt können die Spannmittel 4 - oder ein Teil dieser - direkt auf der Werkstückauflage 3 positioniert werden. Die Anordnung umfasst wie dargestellt weiter eine Augmented-Reality-Anzeigevorrichtung 5 mit einer Anzeigevorrichtung 9, durch welche ein Nutzer 6 ein reales Bild der Werkstückauflage 3 oder eines Teils davon betrachten kann und von der Augmented-Reality-Anzeigevorrichtung 5 ein virtuelles Bild mit Informationen zu einer vorgebbaren Sollposition xy2, xy4 des zumindest einen Spannmittels 4 oder zumindest eines Werkstücks 2 überlagert werden kann (siehe dazu auch Figuren 3a bis 3h).

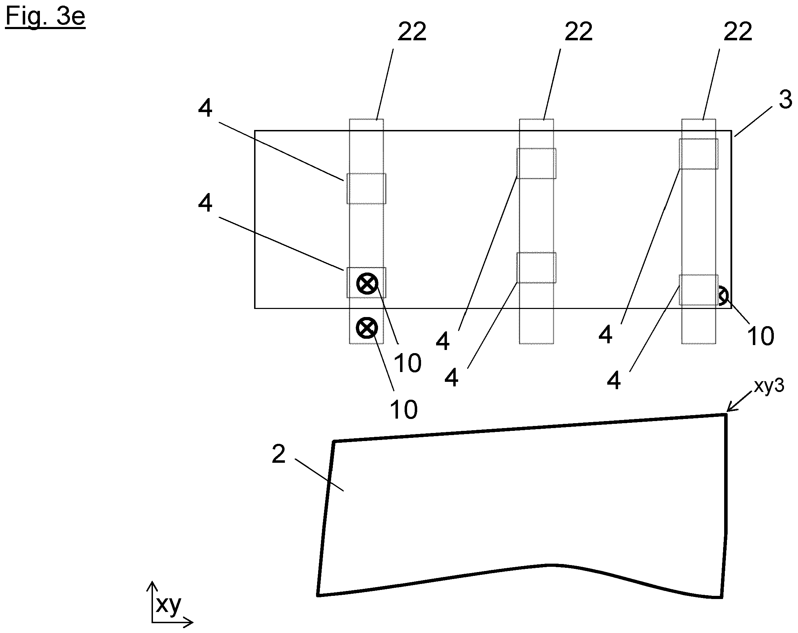

Der Nutzer 6 kann bei Verwendung der grundsätzlich am Körper tragbaren Augmented-Reality-Anzeigevorrichtung 5 eine zumindest teilweise manuelle Positionierung wenigstens eines Spannmittels 4 an einer vorgebbaren Sollposition xy2 vornehmen (siehe dazu auch Figuren 3a bis 3d). Es kann dabei auch eine nachfolgende Positionierung des wenigstens einen Werkstücks 2 an einer vorgebbaren Sollposition xy4 auf oder an dem wenigstens einen Spannmittel erfolgen (siehe dazu auch Figuren 3e bis 3h).

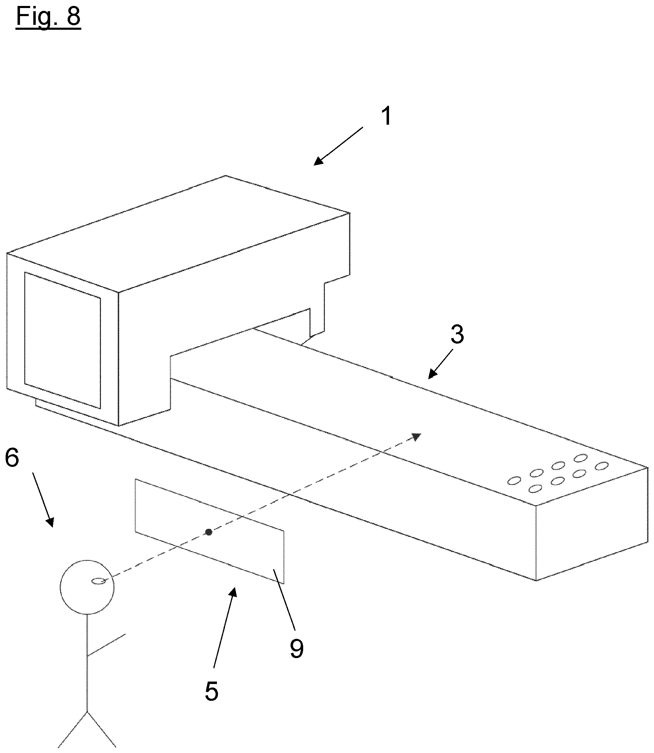

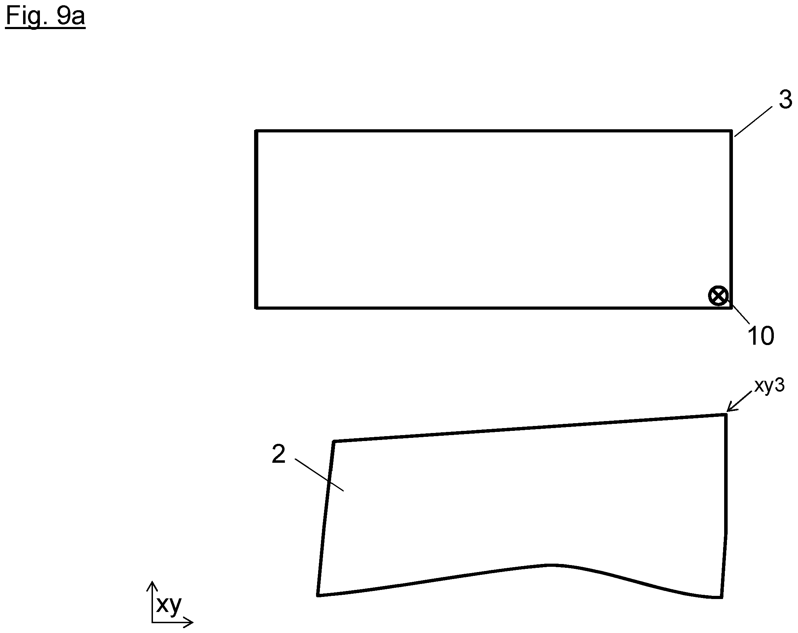

Eine dazu analoge Anordnung, bei welcher das Werkstück 2 direkt auf die Werkstückauflage 3 positioniert wird, ist in den Figuren 8 und 9a bis 9d gezeigt.

Eine Positionierung des Werkstücks 2 und/oder der Spannmittel 4 kann generell beispielsweise durch einen Antrieb unterstützt werden, wobei dieser durch einen Nutzer 6 zu aktivieren ist. Dies kann einer teilweise manuellen Positionierung entsprechen.

Die Augmented-Reality-Anzeigevorrichtung 5 ist wie schematisch dargestellt zwischen der Werkstückauflage 3 und einem Auge des Nutzers 6 angeordnet.

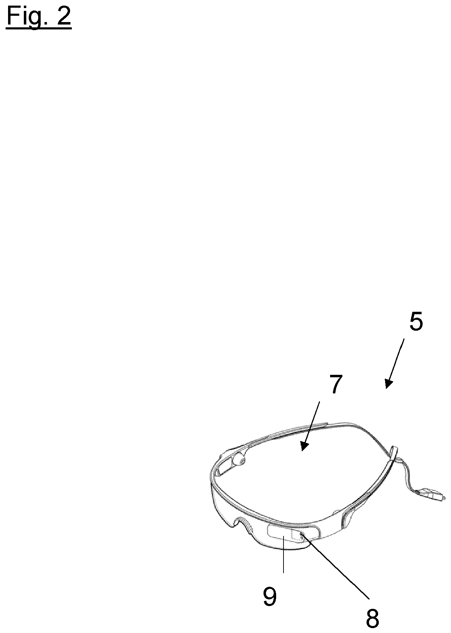

In Figur 2 ist eine besonders bevorzugte Ausführung der Augmented-Reality-Anzeigevorrichtung 5 gezeigt, in welcher diese als Brille 7 ausgebildet ist. Wie dargestellt - aber nicht auf diese Ausführung beschränkt - weist die als Brille 7 ausgebildete Augmented-Reality-Anzeigevorrichtung 5 eine Kamera 8 zur Aufnahme des realen Bild der Werkstückauflage 3 oder eines Teils davon, und eine Anzeigevorrichtung 9 zur Darstellung des virtuellen Bildes umfassend Informationen zur Anordnung, speziell zu den Sollpositionen xy2, xy4 der Spannmittel 4 und/oder des Werkstücks 2. Ist die Anzeigevorrichtung 5 zumindest teilweise transparent ausgebildet, kann durch diese hindurch auch das realen Bildes der wenigstens einen Werkstückauflage 3 oder eines Teils davon angezeigt werden.

In den Figuren 3a bis 3h ist eine schematische Darstellung eines realen Bildes, eines virtuellen Bildes und einer Überlagerung eines realen Bilds mit einem virtuellen Bild einer Werkstückauflage 3 mit Spannmitteln 4 und einem Werkstück 2 gezeigt.

In Figur 3a ist schematisch eine Draufsicht auf eine Werkstückauflage 3 mit drei entlang der Werkstückauflage 3 verschiebbaren Konsolen 22 mit darauf angeordneten Spannmitteln 4, welche wiederum entlang der Konsolen 22 verschiebbar sind, gezeigt. Die Werkstückauflage 3, die Konsolen 22 und die Spannmittel 4 können jeweils mit Positionsmarkern 10 versehen sein, wobei in der schematischen Darstellung der Figuren 3a bis 3d zur Veranschaulichung repräsentativ nur die Werkstückauflage 3, eine der Konsolen 22 und eines der Spannmittel 4 mit einem Positionsmarker 10 versehen sind.

Am Beispiel der mit Positionsmarker 10 versehenen Konsole 22 und den darauf angeordneten Spannmittel 4 soll nun der Vorgang einer durch die Augmented-Reality-Anzeigevorrichtung 5 unterstützen Positionierung der Spannmittel 4 beschrieben werden.

Die in Figur 3a gezeigte Draufsicht kann (bis auf die Positionsangabe der Ist-Position xy1 des Spannmittels 4 in einem Koordinatensystem xy) einem von einem Nutzer durch die Augmented-Reality-Anzeigevorrichtung 5 betrachteten realen Bild der Werkstückauflage 3 entsprechen.

Die Augmented-Reality-Anzeigevorrichtung 5 kann wenigstens eine Kamera 8 zur Aufnahme von Bilddaten des realen Bild der wenigstens einen Werkstückauflage 3 oder eines Teils davon aufweisen und aus den Bilddaten eine Ist-Position der wenigstens einen Werkstückauflage 3 und/oder eine Ist-Position xy1 von dem zumindest einen Spannmittel 4 und/oder eine Ist-Position xy3 von dem zumindest einen Werkstück 2 (siehe beispielsweise Figur 3e oder Figur 9a) bestimmen. Dies kann etwa dadurch erfolgen, dass Konturen, insbesondere Kanten, der wenigstens einen Werkstückauflage 3 und/oder dem zumindest einen Spannmittel 4 erfasst werden. Daraus kann die Position des zumindest einen Spannmittels 3 zur Werkstücksauflage 3, die Positionen mehrerer Spannmittel 4 zueinander und ggf. eine relative Position und Ausrichtung der Augmented-Reality-Anzeigevorrichtung 5 zur Werkstücksauflage 3 bestimmt werden. Bei einer Verwendung von Positionsmarkern 10 kann die Positionsbestimmung durch die Positionsmarker 10 erfolgen oder durch diese unterstützt werden.

Die Informationen zu der vorgebbaren Sollposition xy2 des zumindest einen Spannmittels 4 können grundsätzlich grafisch und/oder numerisch dargestellt werden. Die Informationen zu der vorgebbaren Sollposition xy2 des zumindest einen Spannmittels 4 sowie zu der vorgebbaren Sollposition xy4 des zumindest einen Werkstücks 2 können zumindest aus Informationen zur Bearbeitung des Werkstücks 2 berechnet werden.

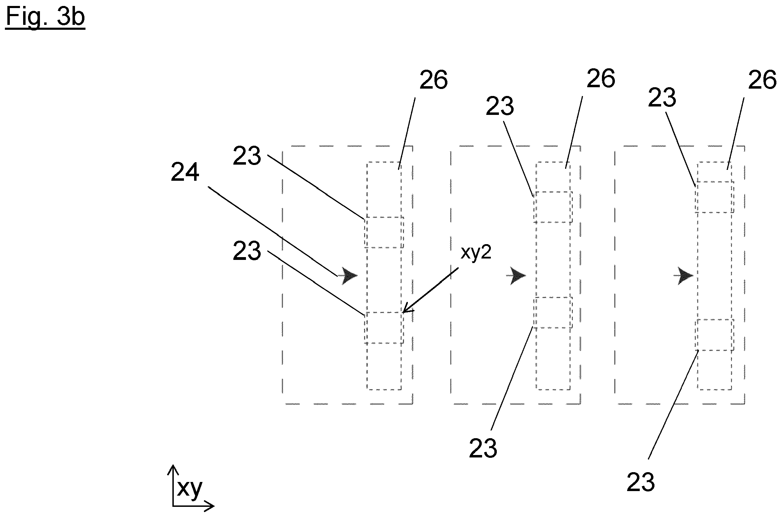

Wie in Figur 3b schematisch dargestellt, können in einem virtuellen Bild Informationen zu der vorgebbaren Sollposition xy2 beispielsweise in Form einer Kontur 23 der Sollposition des zumindest einen Spannmittels 4 sowie eine Kontur 26 der Sollposition der Konsole 12 grafisch hervorgehoben werden. Ebenso ist es möglich, dass die Koordinaten der zumindest einen vorgebbaren Sollposition xy2 angezeigt werden. Das virtuelle Bild kann zusätzlich Informationen dazu enthalten, in welche Richtung ein Spannmittel 4 bewegt werden muss, um es in die vorgegebene vorgebbaren Sollposition xy2 zu bringen, wie dies grafisch durch die Richtungspfeile 24 angezeigt ist.

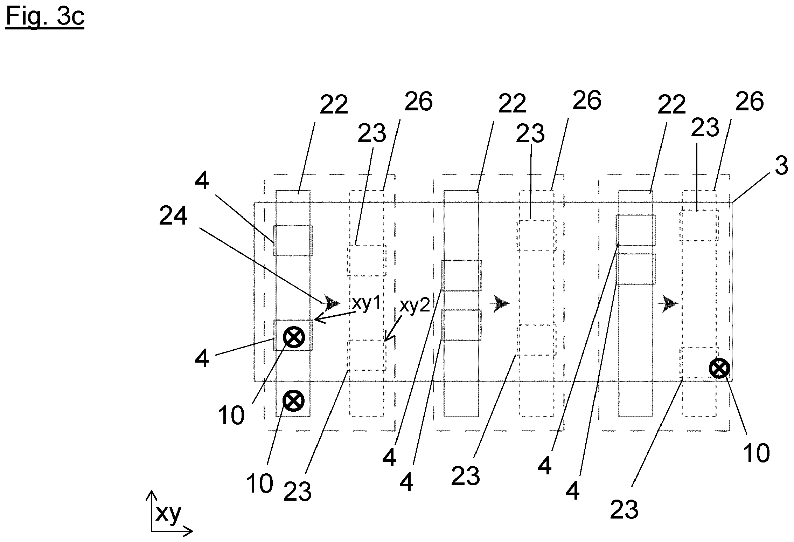

Figur 3c zeigt eine schematische Darstellung der Überlagerung des realen Bildes der wenigstens einen Werkstückauflage 3 mit Informationen zu einer vorgebbaren Sollposition xy2 des zumindest einen Spannmittels 4. Eine solche überlagerte Darstellung kann einem Nutzer 6, welcher das zumindest eine Spannmittel 4 auf der Werkstückauflage 3 zumindest teilweise manuell positioniert, durch die gegebenenfalls am Körper tragbare Augmented-Reality-Anzeigevorrichtung 5 dargestellt werden.

Aus den überlagerten Informationen kann ein Nutzer 6 einfach ableiten, wie die Spannmittel 4 und gegebenenfalls das Werkstück 2 aus deren jeweiliger Ist-Position xy1 bzw. xy3 in die jeweilig vorbestimmbare Soll-Position xy2 bzw. xy4 bewegt werden müssen.

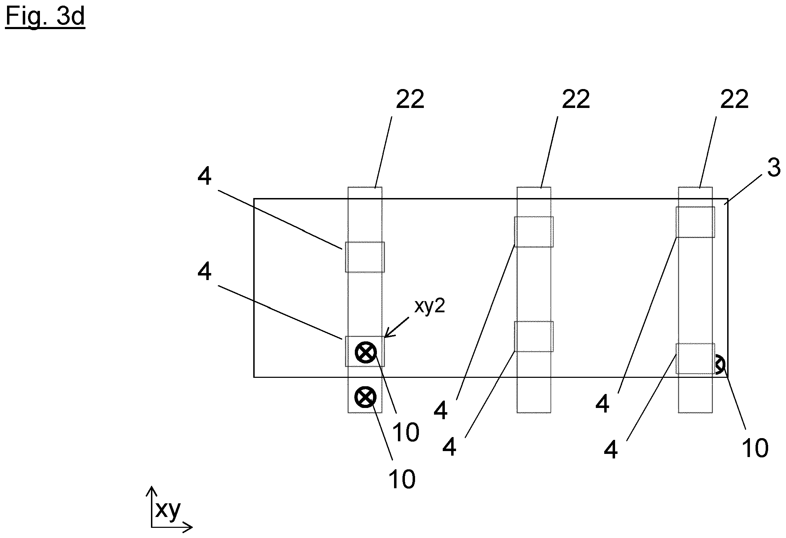

Figur 3d zeigt eine schematische Darstellung eines realen Bildes einer Werkstückauflage 3 mit an vorbestimmbaren Soll-Positionen positionierten Spannmittel 4.

Figur 3e zeigt eine schematische Darstellung eines realen Bildes einer Werkstückauflage 3 mit positionierten Spannmitteln 4 und einem zu bearbeitenden Werkstück 2. Das Werkstück 2 befindet sich wie dargestellt an einer Ist-Position xy3.

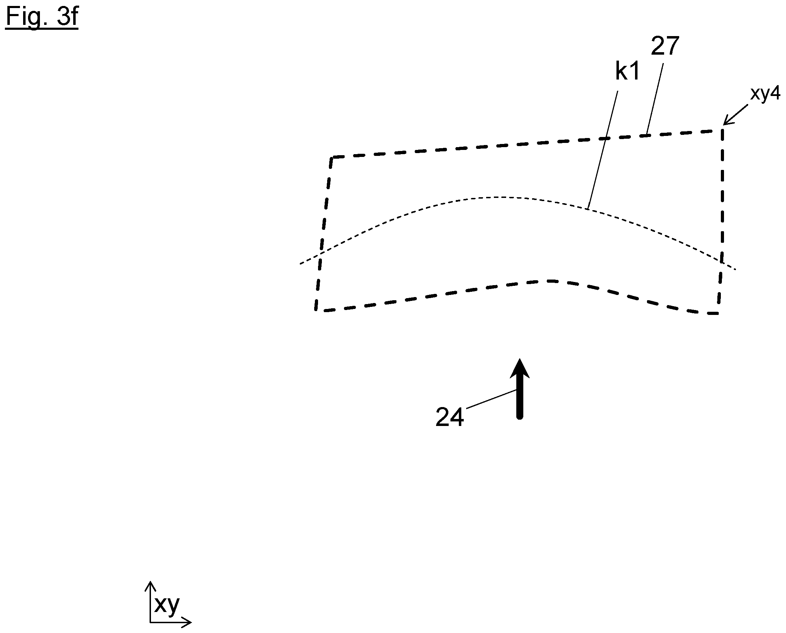

Wie in Figur 3f schematisch dargestellt, können in einem virtuellen Bild Informationen zu der vorgebbaren Sollposition xy4 des Werkstücks 2 beispielsweise in Form einer Kontur 27 der Sollposition des zumindest einen Werkstücks 2 grafisch hervorgehoben werden. Ebenso ist es möglich, dass die Koordinaten der zumindest einen vorgebbaren Sollposition xy4 angezeigt werden. Das virtuelle Bild kann zusätzlich Informationen dazu enthalten, in welche Richtung das Werkstück 2 bewegt werden muss, um es in die vorgegebene vorgebbaren Sollposition xy4 zu bringen, wie dies grafisch durch die Richtungspfeile 24 angezeigt ist. Zusätzlich kann eine Soll-Bearbeitungskontur k1 dargestellt werden.

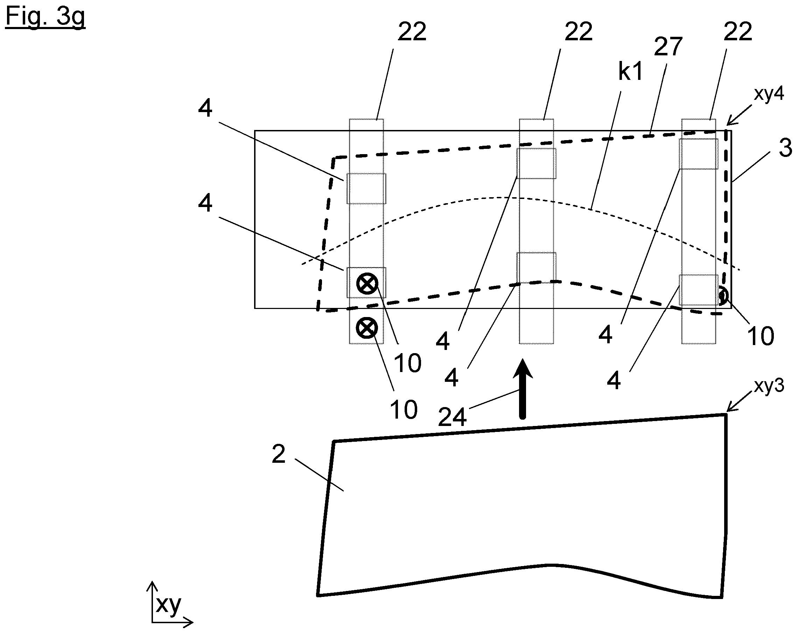

Figur 3g zeigt eine schematische Darstellung der Überlagerung des realen Bildes der wenigstens einen Werkstückauflage 3 mit Informationen zu einer vorgebbaren Sollposition xy4 des zumindest einen Werkstücks 2. Eine solche überlagerte Darstellung kann einem Nutzer 6, welcher das zumindest eine Werkstück 2 auf der Werkstückauflage 3 positioniert, durch die gegebenenfalls am Körper tragbare Augmented-Reality-Anzeigevorrichtung 5 dargestellt werden. Durch die Darstellung der Soll-Bearbeitungskontur k1 kann zusätzlich kontrolliert werden, dass es während der geplanten Bearbeitung zu keinen Kollisionen mit einem der positionierten Spannmittel 4 kommt.

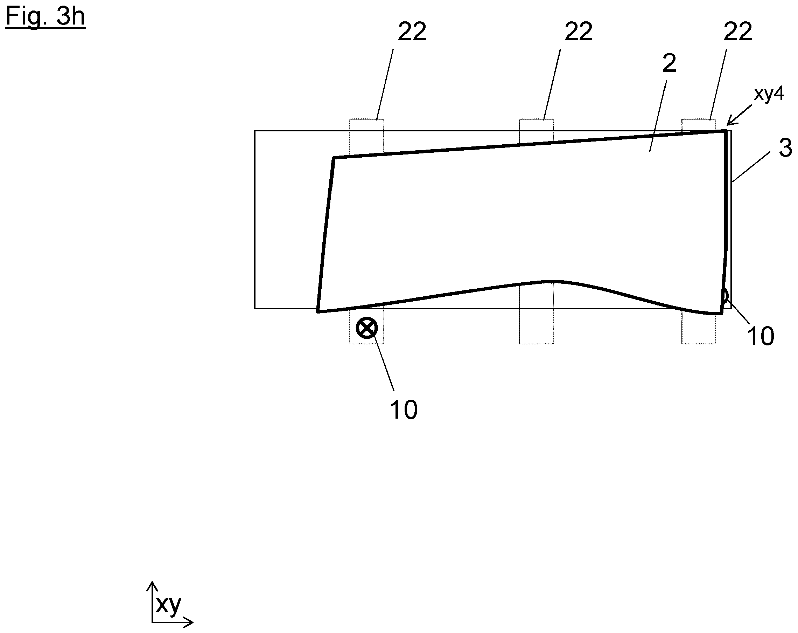

Figur 3h zeigt eine Werkstückauflage 3 mit einem an einer vorgebbaren Sollposition xy4 positionierten Werkstück 2.

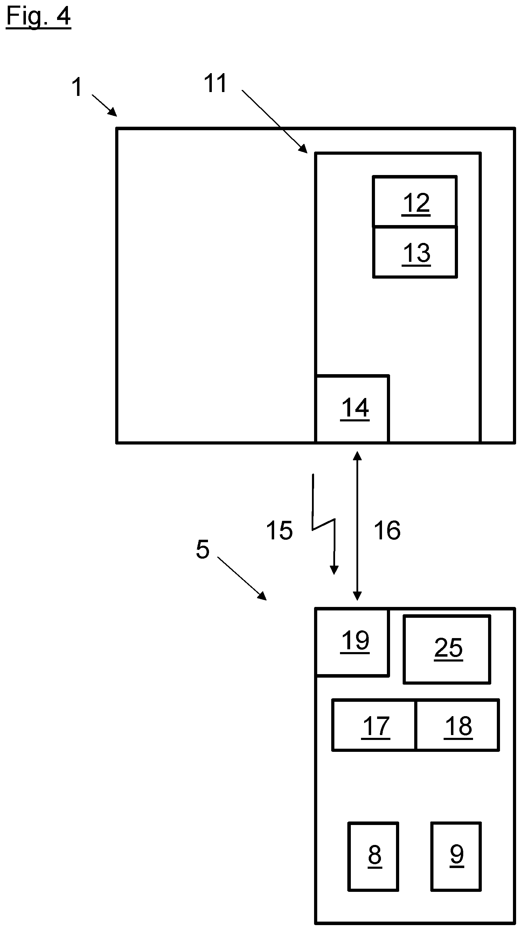

In Figur 4 ist schematisch ein Teil der Anordnung umfassend das CNC-Bearbeitungszentrum 1 und eine Steuereinrichtung 11 zur Ansteuerung des CNC-Bearbeitungszentrums 1 zur Bearbeitung des wenigstens einen Werkstücks 2 gezeigt. Die Steuereinrichtung 11 weist einen Prozessor 12, einen Speicher 13 und eine Kommunikationseinrichtung 14 zur drahtlosen 15 und/oder kabelgebundenen 16 Kommunikation der Augmented-Reality-Anzeigevorrichtung 5. Wie dargestellt, ist die Steuereinrichtung 11 im CNC-Bearbeitungszentrums 1 integriert. Anders als dargestellt kann die Steuereinrichtung 11 jedoch vom CNC-Bearbeitungszentrum 1 getrennt ausgebildet sein oder auch ein gesunder ausgebildeter Rechner Teil der Anordnung sein, welche die Ansteuerung des CNC-Bearbeitungszentrums 1 übernimmt. Das CNC-Bearbeitungszentrum 1 sowie gegebenenfalls der Rechner können entsprechende Kommunikationseinrichtungen aufweisen.

Wie weiter in Figur 4 schematisch dargestellt, weist die Augmented-Reality-Anzeigevorrichtung 5 einen Prozessor 17, einen Speicher 18 und eine Kommunikationseinrichtung 19 zur drahtlosen 15 und/oder kabelgebundenen Kommunikation 16 mit der Steuereinrichtung 11 des CNC-Bearbeitungszentrums 11 auf. Weiter ist ein Energiespeicher 25 zur Energieversorgung der Augmented-Reality-Anzeigevorrichtung 5 vorgesehen.

Aus unterschiedlichen hinterlegten Daten und Informationen - und gegebenenfalls aus zusätzlichen von Augmented-Reality-Anzeigevorrichtung 5 erfassten Bilddaten -können von wenigstens einem der Prozessoren 12, 17 die Informationen zu einer vorgebbaren Sollposition xy4 bzw. xy2 des zumindest einen Werkstücks 2 und/oder des zumindest einen Spannmittels 4 berechnet werden. Über die Kommunikationseinrichtungen 14, 19 können die berechneten Informationen gegebenenfalls an die Augmented-Reality-Anzeigevorrichtung 5 übermittelt werden.

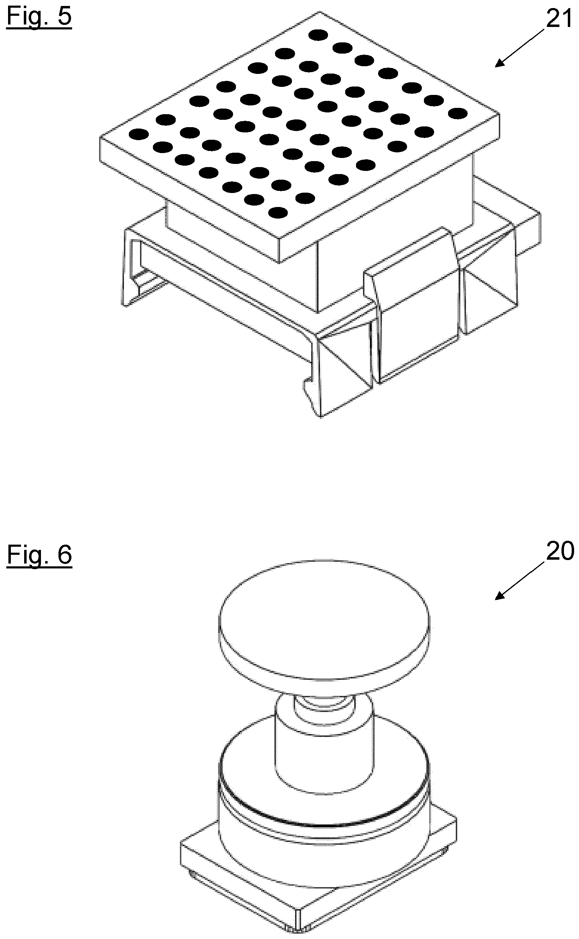

In den Figuren 5 und 6 sind zwei unterschiedliche Ausführungen eines Spannmittels 4 in Form eines Sauggreifers 21 und eines Kantengreifer 20 gezeigt.

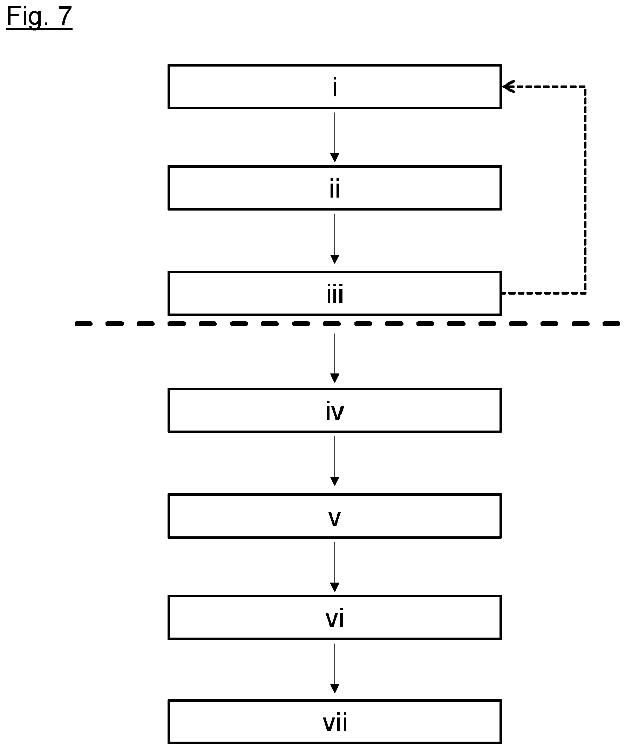

Mit Bezugnahme auf die vorhergehenden Figuren ist in Figur 7 schematisch der Ablauf eines Verfahrens zur zumindest teilweise manuellen Positionierung zumindest eines Spannmittels 4 dargestellt. Bei einem solchen Verfahren zur zumindest teilweise manuellen Positionierung zumindest eines Spannmittels 4 zum Festhalten wenigstens eines, insbesondere plattenförmigen, Werkstücks 2, insbesondere aus Holz oder aus wenigstens einem Holzaustauschstoff, auf wenigstens einer Werkstückauflage 3 durch einen Nutzer 6 unter Verwendung einer wie zuvor beschriebenen Anordnung sind zumindest die folgenden Verfahrensschritte vorgesehen:

Zunächst erfolgt in einem Verfahrensschritt i eine Vorgabe einer Sollposition xy2 des zumindest einen Spannmittels 4 auf der wenigstens einen Werkstückauflage 3. Die Vorgabe einer Sollposition xy2 kann unter Einbeziehung von vorliegenden Daten und Informationen, beispielsweise zur Ausstattung der Teile der Anordnung und der angedachten Bearbeitung des Werkstücks 2, erfolgen.

In einem weiteren Verfahrensschritt ii ist vorgesehen, dass eine Überlagerung eines realen Bildes der wenigstens einen Werkstückauflage 3 oder eines Teils davon mit Informationen zur vorgegebenen Sollposition xy2 des wenigstens einen Spannmittels 4 erfolgt.

Es ist somit in einem weiteren Verfahrensschritt iii vorgesehen, dass eine zumindest teilweise manuelle Positionierung des wenigstens einen Spannmittels 4 an seiner Sollposition xy2 anhand des mit den Informationen zur vorgegebenen Sollposition xy2 des wenigstens einen Spannmittels 4 überlagerten realen Bildes der wenigstens einen Werkstückauflage 3 oder eines Teils davon erfolgt.

Die Verfahrensschritte i, ii und iii können so lange wiederholt werden (angedeutet durch den strichlierten Pfeil von iii nach i), bis alle vorhandenen Spannmittel 4 an der ein jeweiliger Sollposition xy2 positioniert sind.

Durch die folgenden zusätzlichen Verfahrensschritte (die Trennung ist durch die horizontale strichlierte Linie angedeutet) kann das zuvor beschriebene Verfahren umfassen die Verfahrensschritte i, ii und iii - wiederum unter Verwendung einer wie zuvor beschriebenen Anordnung - zur, insbesondere spanabhebenden, Bearbeitung wenigstens eines, insbesondere plattenförmigen, Werkstücks 2, weitergebildet werden:

Zunächst erfolgt in einem Verfahrensschritt iv eine Vorgabe einer Sollposition xy4 des wenigstens einen Werkstücks 2 für seine Bearbeitung. Diese Vorgabe kann beispielsweise Informationen dazu enthalten, wie das zu bearbeitende Werkstück 2 auf den vorpositionierten Spannmitteln 4 anzuordnen ist.

In einem weiteren Verfahrensschritt v erfolgt eine Überlagerung eines realen Bildes der wenigstens einen Werkstückauflage 3 oder eines Teils davon mit Informationen zur vorgegebenen Sollposition xy4 des wenigstens einen Werkstücks 2. Die Überlagerung der Informationen kann dabei durch die Augmented-Reality-Anzeigevorrichtung 5 erfolgen.

Es ist in einem weiteren Verfahrensschritt vi vorgesehen, dass eine Positionierung des wenigstens einen Werkstücks 2 an seiner Sollposition xy4 anhand des mit den Informationen zur vorgegebenen Sollposition xy4 des wenigstens einen Werkstücks 2 überlagerten realen Bildes der wenigstens einen Werkstückauflage 3 oder eines Teils davon erfolgt.

In einem weiteren Verfahrensschritt vii ist vorgesehen, dass eine Durchführung der Bearbeitung erfolgt. Dabei kann ein realen Bildes zumindest eines Ausschnitts des wenigstens einen Werkstücks 2 auf der wenigstens einen Werkstückauflage 3 mit Informationen zu wenigstens einer Soll-Bearbeitungskontur k1 überlagert werden.

Figur 8 zeigt - analog zur Figur 1 - eine weitere Ausführung einer Anordnung mit einem CNC-Bearbeitungszentrum 1 zum Bearbeiten wenigstens eines hier nicht dargestellten Werkstücks und einer Werkstückauflage 3 zum Festhalten des wenigstens einen Werkstücks. Für diese Ausführung der Anordnung ist vorgesehen, dass das Werkstück direkt auf der Werkstückauflage 3 positioniert wird. Die Anordnung umfasst wie dargestellt weiter eine Augmented-Reality-Anzeigevorrichtung 5 mit einer Anzeigevorrichtung 9, durch welche ein Nutzer 6 ein reales Bild der Werkstückauflage 3 oder eines Teils davon betrachten kann und von der Augmented-Reality-Anzeigevorrichtung 5 ein virtuelles Bild mit Informationen zu einer vorgebbaren Sollposition xy4 zumindest eines Werkstücks 2 überlagert werden kann (siehe dazu auch Figuren 9a bis 9d).

Der Nutzer 6 kann bei Verwendung der grundsätzlich am Körper tragbaren Augmented-Reality-Anzeigevorrichtung 5 eine zumindest teilweise manuelle Positionierung wenigstens eines Werkstücks 2 an einer vorgebbaren Sollposition xy4 vornehmen (siehe dazu wieder Figuren 9a bis 9d).

Die Augmented-Reality-Anzeigevorrichtung 5 ist wie schematisch dargestellt zwischen der Werkstückauflage 3 und einem Auge des Nutzers 6 angeordnet.

Figur 9a zeigt eine schematische Darstellung eines realen Bildes einer Werkstückauflage 3 und einem zu bearbeitenden Werkstück 2. Das Werkstück 2 befindet sich wie dargestellt an einer Ist-Position xy3. zur Bestimmung der Position der Werkstückauflage 3 weist diese einem Positionsmarker 10 auf.

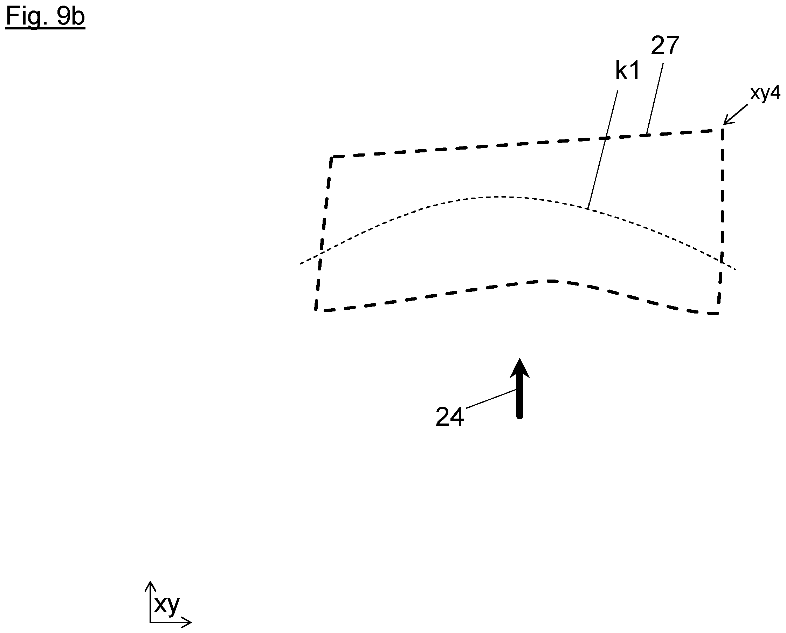

Wie in Figur 9b schematisch dargestellt, können in einem virtuellen Bild Informationen zu der vorgebbaren Sollposition xy4 des Werkstücks 2 beispielsweise in Form einer Kontur 27 der Sollposition des zumindest einen Werkstücks 2 grafisch hervorgehoben werden. Ebenso ist es möglich, dass die Koordinaten der zumindest einen vorgebbaren Sollposition xy4 angezeigt werden. Das virtuelle Bild kann zusätzlich Informationen dazu enthalten, in welche Richtung das Werkstück 2 bewegt werden muss, um es in die vorgegebene vorgebbaren Sollposition xy4 zu bringen, wie dies grafisch durch die Richtungspfeile 24 angezeigt ist. Zusätzlich kann eine Soll-Bearbeitungskontur k1 dargestellt werden.

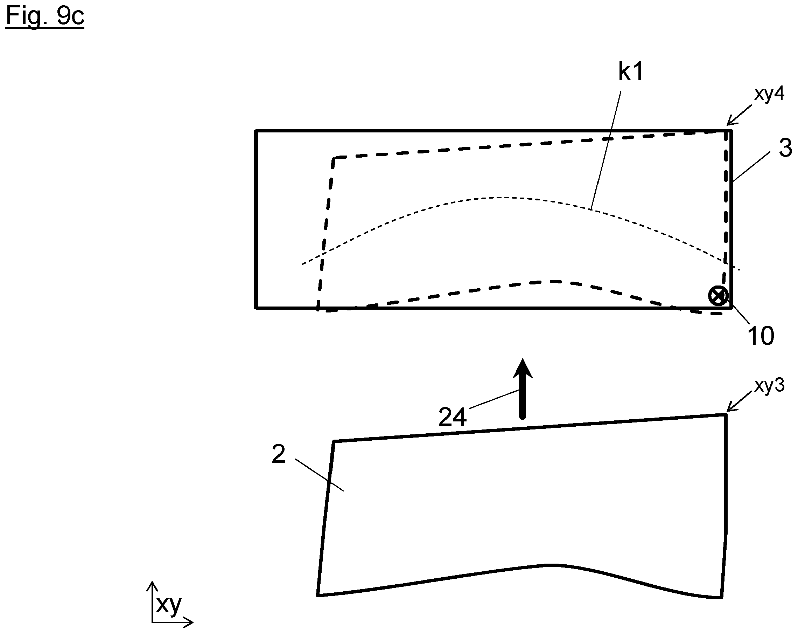

Figur 9c zeigt eine schematische Darstellung der Überlagerung des realen Bildes der wenigstens einen Werkstückauflage 3 mit Informationen zu einer vorgebbaren Sollposition xy4 des zumindest einen Werkstücks 2. Eine solche überlagerte Darstellung kann einem Nutzer 6, welcher das zumindest eine Werkstück 2 auf der Werkstückauflage 3 positioniert, durch die gegebenenfalls am Körper tragbare Augmented-Reality-Anzeigevorrichtung 5 dargestellt werden. Durch die Darstellung der Soll-Bearbeitungskontur k1 kann zusätzlich kontrolliert werden, dass es während der geplanten Bearbeitung zu keinen Kollisionen mit der Werkstückauflage 3 kommt.

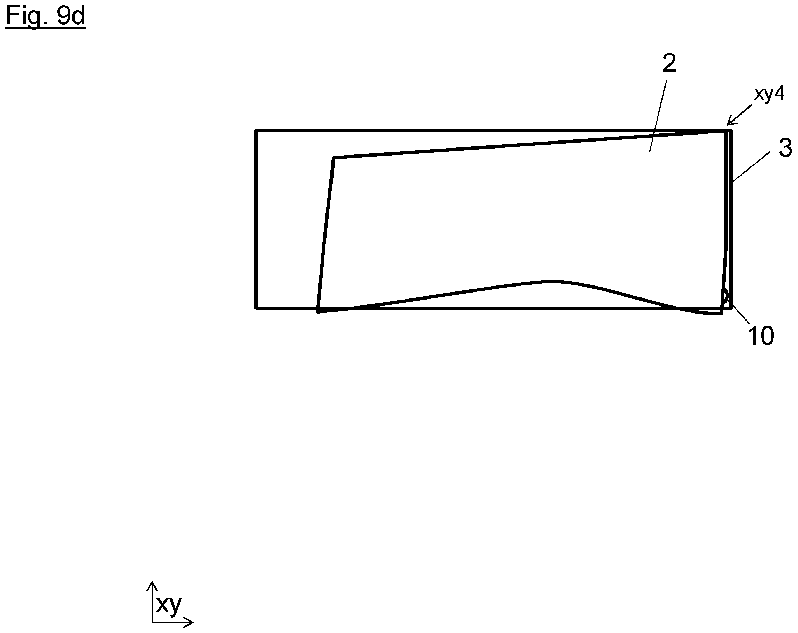

Figur 9d zeigt eine Werkstückauflage 3 mit einem an einer vorgebbaren Sollposition xy4 positionierten Werkstück 2.

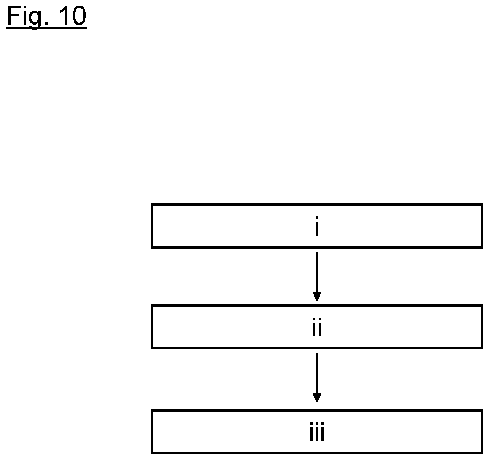

Mit Bezugnahme auf die vorhergehenden Figuren 8 und 9a bis 9d ist in Figur 10 schematisch der Ablauf eines Verfahrens zur zumindest teilweise manuellen Positionierung zumindest eines Werkstücks 2 dargestellt. Bei einem solchen Verfahren zur zumindest teilweise manuellen Positionierung zumindest eines, insbesondere plattenförmigen, Werkstücks (2), insbesondere aus Holz oder aus wenigstens einem Holzaustauschstoff, auf wenigstens einer Werkstückauflage (3) durch einen Nutzer (6) unter Verwendung einer wie zuvor beschriebenen Anordnung sind zumindest die folgenden Verfahrensschritte vorgesehen:
Zunächst erfolgt in einem Verfahrensschritt i eine Vorgabe einer Sollposition (xy4) des zumindest einen Werkstücks (2) auf der wenigstens einen Werkstückauflage (3) und/oder einer Soll-Bearbeitungskontur (k1) des zumindest einen Werkstücks (2).

In einem weiteren Verfahrensschritt ii ist vorgesehen, dass eine Überlagerung eines realen Bildes der wenigstens einen Werkstückauflage oder eines Teils davon mit Informationen zur vorgegebenen Sollposition (xy4) und/oder Soll-Bearbeitungskontur (k1) des zumindest einen Werkstücks (2) erfolgt.

Es ist somit in einem weiteren Verfahrensschritt iii vorgesehen, dass eine zumindest teilweise manuelle Positionierung des zumindest einen Werkstücks (2) anhand des mit den Informationen zur vorgegebenen Sollposition (xy4) und/oder Soll-Bearbeitungskontur (k1) des zumindest einen Werkstücks (2) überlagerten realen Bildes der wenigstens einen Werkstückauflage (3), oder eines Teils davon, erfolgt.

### Bezugszeichenliste:

- 1: CNC-Bearbeitungszentrum
- 2: Werkstück
- 3: Werkstückauflage
- 4: Spannmittel
- 5: Augmented-Reality-Anzeigevorrichtung
- 6: Nutzer
- 7: Brille
- 8: Kamera
- 9: Anzeigevorrichtung
- 10: Positionsmarker
- 11: Steuereinrichtung
- 12: Prozessor Steuereinrichtung
- 13: Speicher Steuereinrichtung
- 14: Kommunikationseinrichtung Steuereinrichtung
- 15: drahtlose Kommunikation
- 16: kabelgebundene Kommunikation
- 17: Prozessor Augmented-Reality-Anzeigevorrichtung
- 18: Speicher Augmented-Reality-Anzeigevorrichtung
- 19: Kommunikationseinrichtung Augmented-Reality-Anzeigevorrichtung
- 20: Kantengreifer
- 21: Sauggreifer
- 22: Konsolen
- 23: Kontur Sollposition Spannmittel
- 24: Richtungspfeil
- 25: Energiespeicher
- 26: Kontur Sollposition Konsole
- 27: Kontur Sollposition Werkstück
- xy1: Ist-Position Spannmittel
- xy2: Sollposition Spannmittel
- xy3: Ist-Position Werkstück
- xy4: Sollposition Werkstück
- k1: Soll-Bearbeitungskontur

## Patentansprüche

1. Anordnung umfassend
- ein CNC-Bearbeitungszentrum (1) zum, insbesondere spanabhebenden, Bearbeiten wenigstens eines, insbesondere plattenförmigen, Werkstücks (2), insbesondere aus Holz oder aus wenigstens einem Holzaustauschstoff,
- wenigstens eine Werkstückauflage (3) und
- zumindest ein zumindest teilweise manuell auf der wenigstens einen Werkstückauflage (3) zu positionierendes Werkstück (2) und/oder Spannmittel (4) zum Festhalten des wenigstens einen Werkstücks (2),
**dadurch gekennzeichnet, dass** wenigstens eine Augmented-Reality-Anzeigevorrichtung (5) vorgesehen ist, welche dazu ausgebildet ist, ein reales Bild der wenigstens einen Werkstückauflage (3) oder eines Teils davon mit Informationen zu einer vorgebbaren Sollposition (xy4) und/oder Soll-Bearbeitungskontur (k1) des zumindest einen Werkstücks (2) und/oder zu einer vorgebbaren Sollposition (xy2) des zumindest einen Spannmittels (4) zu überlagern, und welche von einem Nutzer (6), welcher das zumindest eine Werkstück (2) und/oder Spannmittel (4) auf der wenigstens einen Werkstückauflage (3) zumindest teilweise manuell positioniert, am Körper tragbar ist.

2. Anordnung nach Anspruch 1, wobei die wenigstens eine Augmented-Reality-Anzeigevorrichtung (5) zwischen der wenigstens einen Werkstückauflage (3) und einem Auge des Nutzers (6) anordenbar ist, wobei vorzugsweise die wenigstens eine Augmented-Reality-Anzeigevorrichtung (5) als Brille (7) ausgebildet ist.

3. Anordnung nach einem der Ansprüche 1 oder 2, wobei die wenigstens eine Augmented-Reality-Anzeigevorrichtung (5)
- wenigstens eine Kamera (8) zur Aufnahme des realen Bild der wenigstens einen Werkstückauflage (3) oder eines Teils davon, und/oder
- wenigstens eine Anzeigevorrichtung (9) zur Darstellung des virtuellen Bildes umfassend Informationen zu den Sollpositionen (xy4) und/oder Soll-Bearbeitungskonturen (k1) der Werkstücke (2) und/oder zu den Sollpositionen (xy2) der Spannmittel (4), und vorzugsweise des realen Bildes der wenigstens einen Werkstückauflage (3) oder eines Teils davon, aufweist.

4. Anordnung nach einem der Ansprüche 1 bis 3, wobei wenigstens ein Positionsmarker (10) für die Augmented-Reality-Anzeigevorrichtung (5) vorgesehen ist, vorzugsweise wobei der wenigstens eine Positionsmarker (10) an der wenigstens einen Werkstückauflage (3) und/oder dem zumindest einen Spannmittel (4) angeordnet ist.

5. Anordnung nach einem der Ansprüche 1 bis 4, wobei die Augmented-Reality-Anzeigevorrichtung (5) wenigstens eine Kamera (8) zur Aufnahme von Bilddaten des realen Bild der wenigstens einen Werkstückauflage (3) oder eines Teils davon aufweist und aus den Bilddaten eine Ist-Position der wenigstens einen Werkstückauflage (3) und/oder eine Ist-Position (xy1) von dem zumindest einen Spannmittel (4) und/oder eine Ist-Position (xy3) von dem zumindest einen Werkstück (2) bestimmbar ist.

6. Anordnung nach einem der Ansprüche 1 bis 5, wobei das virtuelle Bild
- Informationen zum Grad einer Überdeckung einer Ist-Position (xy1) eines Spannmittels (4) mit der Sollposition (xy2) des Spannmittels (4), und/oder
- Informationen zum Grad einer Überdeckung einer Ist-Position (xy3) eines Werkstücks (2) mit der Sollposition (xy4) des Werkstücks (2) umfasst.

7. Anordnung nach einem der Ansprüche 1 bis 6, wobei die Informationen zu der vorgebbaren Sollposition (xy2) des zumindest einen Spannmittels (4) zumindest aus Informationen zur Bearbeitung des Werkstücks (2) berechenbar sind.

8. Anordnung nach einem der Ansprüche 1 bis 7, wobei die Anordnung weiter eine Steuereinrichtung (11) zur Ansteuerung des CNC-Bearbeitungszentrums (1) zur Bearbeitung des wenigstens einen Werkstücks (2) umfasst, wobei die Steuereinrichtung (11) einen Prozessor (12), einen Speicher (13) und eine Kommunikationseinrichtung (14) zur drahtlosen (15) und/oder kabelgebundenen (16) Kommunikation mit dem CNC-Bearbeitungszentrum (1) und/oder der Augmented-Reality-Anzeigevorrichtung (5) aufweist.

9. Anordnung nach einem der Ansprüche 1 bis 8, wobei die Augmented-Reality-Anzeigevorrichtung (5) einen Prozessor (17), einen Speicher (18) und eine Kommunikationseinrichtung (19) zur drahtlosen (15) und/oder kabelgebundenen Kommunikation (16) mit dem CNC-Bearbeitungszentrum (1) und/oder einer Steuereinrichtung (11) des CNC-Bearbeitungszentrums (11) aufweist.

10. Anordnung nach einem der Ansprüche 1 bis 9, wobei das zumindest eine Spannmittel (4) als Kantengreifer (20) oder als Sauggreifer (21) ausgebildet ist.

11. Verfahren zur zumindest teilweise manuellen Positionierung zumindest eines Spannmittels (4) zum Festhalten wenigstens eines, insbesondere plattenförmigen, Werkstücks (2), insbesondere aus Holz oder aus wenigstens einem Holzaustauschstoff, auf wenigstens einer Werkstückauflage (3) durch einen Nutzer (6) unter Verwendung einer Anordnung nach einem der vorhergehenden Ansprüche, **gekennzeichnet durch** die folgenden Verfahrensschritte:
i. Vorgabe einer Sollposition (xy2) des zumindest einen Spannmittels (4) auf der wenigstens einen Werkstückauflage (3),
ii. Überlagerung eines realen Bildes der wenigstens einen Werkstückauflage oder eines Teils davon mit Informationen zur vorgegebenen Sollposition (xy2) des wenigstens einen Spannmittels (4), und
iii. zumindest teilweise manuelle Positionierung des wenigstens einen Spannmittels (4) an seiner Sollposition (xy2) anhand des mit den Informationen zur vorgegebenen Sollposition (xy2) des wenigstens einen Spannmittels (4) überlagerten realen Bildes der wenigstens einen Werkstückauflage (3) oder eines Teils davon.

12. Verfahren zur zumindest teilweise manuellen Positionierung zumindest eines, insbesondere plattenförmigen, Werkstücks (2), insbesondere aus Holz oder aus wenigstens einem Holzaustauschstoff, auf wenigstens einer Werkstückauflage (3) durch einen Nutzer (6) unter Verwendung einer Anordnung nach einem der vorhergehenden Ansprüche, **gekennzeichnet durch** die folgenden Verfahrensschritte:
i. Vorgabe einer Sollposition (xy4) des zumindest einen Werkstücks (2) auf der wenigstens einen Werkstückauflage (3) und/oder einer Soll-Bearbeitungskontur (k1) des zumindest einen Werkstücks (2),
ii. Überlagerung eines realen Bildes der wenigstens einen Werkstückauflage oder eines Teils davon mit Informationen zur vorgegebenen Sollposition (xy4) und/oder Soll-Bearbeitungskontur (k1) des zumindest einen Werkstücks (2), und
iii. zumindest teilweise manuelle Positionierung des zumindest einen Werkstücks (2) anhand des mit den Informationen zur vorgegebenen Sollposition (xy4) und/oder Soll-Bearbeitungskontur (k1) des zumindest einen Werkstücks (2) überlagerten realen Bildes der wenigstens einen Werkstückauflage (3) oder eines Teils davon.

13. Verfahren zur, insbesondere spanabhebenden, Bearbeitung wenigstens eines, insbesondere plattenförmigen, Werkstücks (2), umfassend das Verfahren zur zumindest teilweisen manuellen Positionierung wenigstens eines Spannmittels (4) nach Anspruch 11, und die folgenden Verfahrensschritte:
iv. Vorgabe einer Sollposition (xy4) des wenigstens einen Werkstücks (2) für seine Bearbeitung,
v. Überlagerung eines realen Bildes der wenigstens einen Werkstückauflage (3) oder eines Teils davon mit Informationen zur vorgegebenen Sollposition (xy4) des wenigstens einen Werkstücks (2),
vi. Positionierung des wenigstens einen Werkstücks (2) an seiner Sollposition (xy4) anhand des mit den Informationen zur vorgegebenen Sollposition (xy4) des wenigstens einen Werkstücks (2) überlagerten realen Bildes der wenigstens einen Werkstückauflage (3) oder eines Teils davon, und
vii. Durchführung der Bearbeitung, vorzugsweise wobei ein realen Bildes zumindest eines Ausschnitts des wenigstens einen Werkstücks (2) auf der wenigstens einen Werkstückauflage (3) mit Informationen zu wenigstens einer Soll-Bearbeitungskontur (k1) überlagert wird.

14. Verwendung einer am Körper eines Nutzers (6) tragbaren Augmented-Reality-Anzeigevorrichtung (5) zur zumindest teilweise manuellen Positionierung wenigstens eines Spannmittels (4) zum Festhalten wenigstens eines, insbesondere plattenförmigen, Werkstücks (2), insbesondere aus Holz oder aus wenigstens einem Holzaustauschstoff, während einer, insbesondere spanabhebenden, Bearbeitung auf wenigstens einem Spannmittel (3) auf wenigstens einer Werkstückauflage (3) an einer vorgebbaren Sollposition (xy2), insbesondere in einer Anordnung nach einem der Ansprüche 1 bis 10, und vorzugsweise zur nachfolgenden Positionierung des wenigstens einen Werkstücks (2) an einer vorgebbaren Sollposition (xy4) auf oder an dem wenigstens einen Spannmittel (4) .

15. Verwendung einer am Körper eines Nutzers (6) tragbaren Augmented-Reality-Anzeigevorrichtung (5) zur zumindest teilweise manuellen Positionierung wenigstens eines, insbesondere plattenförmigen, Werkstücks (2), insbesondere aus Holz oder aus wenigstens einem Holzaustauschstoff, auf wenigstens einer Werkstückauflage (3) oder auf oder an wenigstens einem Spannmittel (4) auf der wenigstens einen Werkstückauflage (3), insbesondere in einer Anordnung nach einem der Ansprüche 1 bis 10.
